# EUROPÄISCHE PATENTSCHRIFT

(11) **EP 0 442 104 B1**
(45) Veröffentlichungstag und Bekanntmachung des Hinweises auf die Patenterteilung: **23.11.1994**
(21) Anmeldenummer: 90124552.2
(22) Anmeldetag: 18.12.1990
(51) Int. Cl.: B23B 51/00, B23B 51/08

(54) **Vorrichtung zur Herstellung von Bohrlöchern mit Hinterschneidung**
Device for drilling undercutted holes
Dispositif pour la réalisation de perçages épaulés

(30) Priorität: 14.02.1990 DE 4004485
(43) Veröffentlichungstag der Anmeldung: 21.08.1991
(73) Patentinhaber: fischerwerke Artur Fischer GmbH & Co. KG, D-72178 Waldachtal (DE)
(72) Erfinder: Haug, Willi, W-7290 Freudenstadt-Musbach (DE)

(56) Entgegenhaltungen:
- EP-A- 0 094 070
- EP-A- 0 365 796
- DE-A- 3 222 159
- DE-A- 3 838 875

## Beschreibung

Die Erfindung betrifft eine Vorrichtung zur Herstellung von Bohrlöchern mit Hinterschneidung, insbesondere in Fassadenplatten, gemäß der Gattung des Hauptanspruches.

Zur Herstellung von Bohrlöchern mit Hinterschneidung ist aus der DE 30 27 408 A1 eine Vorrichtung der oben genannten Gattung bekannt, die eine mit einer kalottenförmigen Mulde versehene und im Bohrloch arretierbare Lagerbuchse aufweist, in der ein mit einem Bund versehenes Schwenkteil abgestützt und verschwenkbar gelagert ist. Durch Ausschwenken des Schwenkteiles bei gleichzeitiger Rührbewegung wird von den am Bohrwerkzeug angeordneten Seitenschneiden im Bereich des Bohrlochgrundes eine Hinterschneidung ausgerieben, in die ein Spreizdübel mit aufspreizbarer Spreizhülse formschlüssig einsetzbar ist.

Derartige Bohrlöcher mit Hinterschneidung lassen sich auch in Fassadenplatten oder dgl. einbringen, jedoch müssen dort die Hinterschneidungen sehr exakt ausgeführt werden, damit beim Einsetzen und Aufspreizen eines Spreizankers kein zu hoher Spreizdruck entsteht. Ein zu hoher Spreizdruck kann nämlich dazu führen, daß ein Teil der Fassadenplatte wegplatzt. Um eine exakte Hinterschneidung herzustellen, werden Bohrwerkzeuge verwendet, die einen mit Diamantsplitter bestückten Bohrkopf aufweisen. Für diese schlag- und stoßempfindlichen Bohrwerkzeuge sowie für die erforderliche Genauigkeit der Bohrlöcher mit Hinterschneidung in dünnwandigen Fassadenplatten reichen die bekannten Ausführungsformen zur Bildung eines Schwenklagers nicht aus.

Der Erfindung liegt daher die Aufgabe zugrunde, eine Vorrichtung zur Herstellung von Bohrlöchern mit Hinterschneidung, insbesondere in Fassadenplatten, zu schaffen, die die Verwendung eines mit Diamantsplitter bestückten Bohrwerkzeuges sowie die Herstellung eines genauen, auf den Spreizdübel abgestimmten Bohrloches ermöglicht.

Die Lösung dieser Aufgabe wird durch die im Hauptanspruch angegebenen Merkmale erreicht. Durch die axiale Verspannung des an der Hülse angeordneten Bundes mit seiner linienförmig am Boden der Lagerbuchse anliegenden Stirnfläche und dem an seiner anderen Stirnfläche angeordneten, elastisch verformbaren Element, wobei der Bund an seiner Mantelfläche linienförmig umlaufend in der Lagerbuchse geführt ist, ergibt sich bei der Erstellung des zylindrischen Bohrloches eine Zwangsführung, die ein Verlaufen des Bohrloches ausschließt. Nach dem Erstellen des zylindrischen Bohrloches wird die mit der Bohrmaschine verbundene Hülse ausgelenkt. Dabei verformt sich das elastische Element auf der ausgelenkten Seite, während auf der anderen Seite die axiale Verspannung erhalten bleibt. Dadurch wird auch bei der Erstellung der Hinterschneidung eine exakte Zwangsführung erreicht, die zu einer genau definierten Hinterschneidung führt. Ferner werden auch Stöße und ruckartige Bewegungen beim Ausschwenken vermieden, so daß lange Werkzeug-Standzeiten erreicht werden. Eine umlaufende Hinterschneidung ist dann erreicht, wenn im ausgelenkten Zustand mindestens eine vollständige Rührbewegung bis zum Ausgangspunkt durchgeführt ist.

Als elastisch verformbares Element ist entweder ein Gummiring oder eine an ihren beiden Enden plane Stützflächen aufweisende Druckfeder geeignet, die in einer in der Stirnfläche des Bundes eingebrachten Ringnut gehalten sind. Bei Verwendung einer Druckfeder empfiehlt es sich, diese auch in eine Ringnut des Bodens der Lagerbuchse einzulassen, um eine Seitenführung des Adapters über die Druckfeder zu erreichen. Durch die linienförmige Anlage wird die Verschwenkung des Adapters nicht behindert.

Eine Möglichkeit zur Begrenzung des Schwenkwinkels kann dadurch erreicht werden, daß die Achsbohrung der Lagerbuchse zur Mantelfläche der Hülse einen den Schwenkwinkel begrenzenden Ringspalt aufweist. Andere Möglichkeiten zur Begrenzung des Schwenkwinkels sind beispielsweise auch das Aufsitzen der das elastisch verformbare Element tragenden Stirnfläche des Bundes auf dem Boden der Lagerbuchse oder bei Verwendung einer Druckfeder das Aneinanderliegen der Windungen auf der ausgelenkten Seite.

Zur Halterung der Vorrichtung kann die Lagerbuchse mit einem eine Spanneinrichtung für die Fassadenplatte aufweisenden Ständer verbunden und über einen Hebel gegen die Fassadenplatte zur Erstellung des Bohrloches bewegbar sein.

Die Erfindung wird nachfolgend anhand der Zeichnung näher erläutert.

Es zeigen:

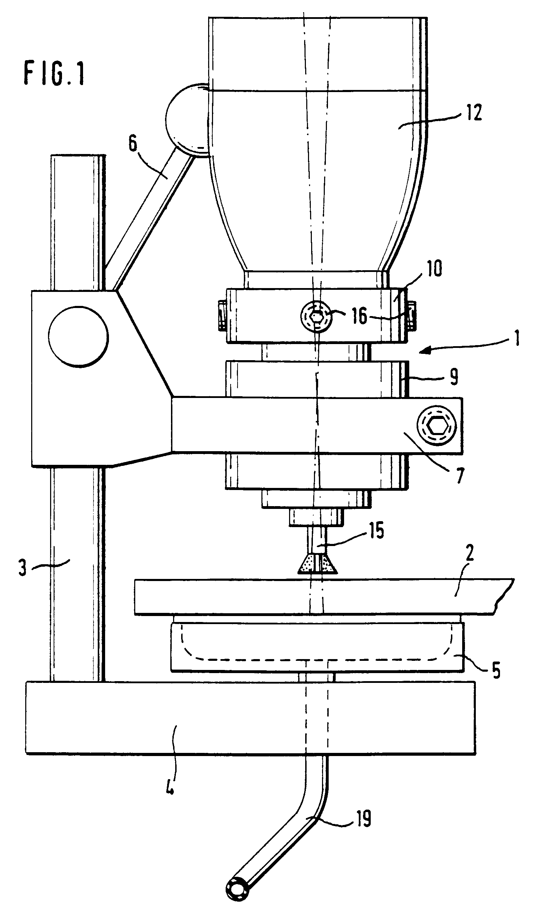

- Figur 1: den Gesamtaufbau der Vorrichtung mit Ständer und Spanneinrichtung für die Fassadenplatte,
- Figur 2: eine Ausführungsform des Schwenklagers der Vorrichtung,
- Figur 3: eine weitere Ausführungsform des Schwenklagers.

Die Vorrichtung 1 zur Herstellung von Bohrlöchern mit Hinterschneidung in Fassadenplatten 2 ist in einen Ständer 3 integriert, der einerseits an seiner Bodenplatte 4 eine Spanneinrichtung 5 für die Fassadenplatte 2 aufweist, und andererseits über einen Hebel 6 verfügt, mit dem die die Vorrichtung 1 aufnehmende und mit dem Ständer 3 verbundene Halterung 7 auf- und abbewegbar ist. Zum Verspannen der Vorrichtung 1 mit der Halterung 7 weist letztere eine geschlitzte Aufnahmebohrung 8 auf, in der die Lagerbuchse 9 der Vorrichtung 1 durch Zusammenziehen der Aufnahmebohrung 8 der Halterung 7 eingespannt ist. Von der Lagerbuchse 9 wiederum wird der an der Hülse 10 angeordnete umlaufende Bund 11 aufgenommen, so daß bei der Auf- und Abbewegung der Halterung 7 die gesamte Bohrvorrichtung über den Bund 11 der Hülse 10 mitbewegt wird.

Durch die Hülse 10 verläuft der mit der Bohrmaschine 12 drehmomentübertragend verbundene Adapter 22, der an seiner der Bohrmaschine 12 gegenüberliegenden Stirnseite das zur Herstellung des Bohrloches 13 und der Hinterschneidung 14 erforderliche Bohrwerkzeug 15 aufweist. Die Hülse 10 ist mit dem Gehäuse der Bohrmaschine 12 starr über Schrauben 16 verbunden, so daß bei einer Auslenkung der Hülse 10 auch die Bohrmaschine 12 und damit die Bohrachse 17 ausgelenkt wird. Die Auslenkung erfolgt vorteilhafterweise wegen der günstigen Hebelverhältnisse direkt mit der Bohrmaschine 12. Durch eine mindestens einen vollständigen Kreis beschreibende Taumelbewegung beschreibt der Bohrkopf 18 des Bohrwerkzeuges 15 ebenfalls einen Kreis, der durch die Auslenkung der Bohrachse 17 größer ist als der Bohrkopfdurchmesser. Dadurch entsteht nach der Erstellung des zylindrischen Bohrloches 13 in der Fassadenplatte 2 mit senkrecht stehender Bohrachse die Hinterschneidung 14 in der Bohrlochtiefe durch Ausschwenken der Bohrachse 17 und gleichzeitiger Taumelbewegung.

Bei der Erstellung des Bohrloches 13 wird die Fassadenplatte 2 durch eine Unterdruck-Spanneinrichtung 5 gehalten. Die Fassadenplatte 2 wird auf den Spanntisch aufgelegt und die über einen Schlauch 19 angeschlossene Saugpumpe (nicht dargestellt) zur Erzeugung des Unterdrucks eingeschaltet.

Zur Erstellung des Bohrloches 13 wird ein Bohrwerkzeug 15 verwendet, das über ein mit einem Innengewinde 20 versehenes Kupplungsstück 21 mit dem in die Bohrmaschine 12 einspannbaren Adapter 22 verbindbar ist. An dem vom Kupplungsstück 21 ausgehenden reduzierten Schaff des Bohrwerkzeuges 15 ist an dessen Ende ein mit Diamantsplitter bestückter konisch sich zu seiner Stirnseite hin erweiternder Bohrkopf 18 angeordnet. Zur Verbesserung der Schnittleistung und Führung dieses Bohrwerkzeuges bei der Erstellung des zylindrischen Teils des Bohrloches weist der Bohrkopf 18 wenigstens einen von dessen äußeren Rand ausgehenden Schlitz 23 auf, der sich über die Achsmitte hinaus erstreckt.

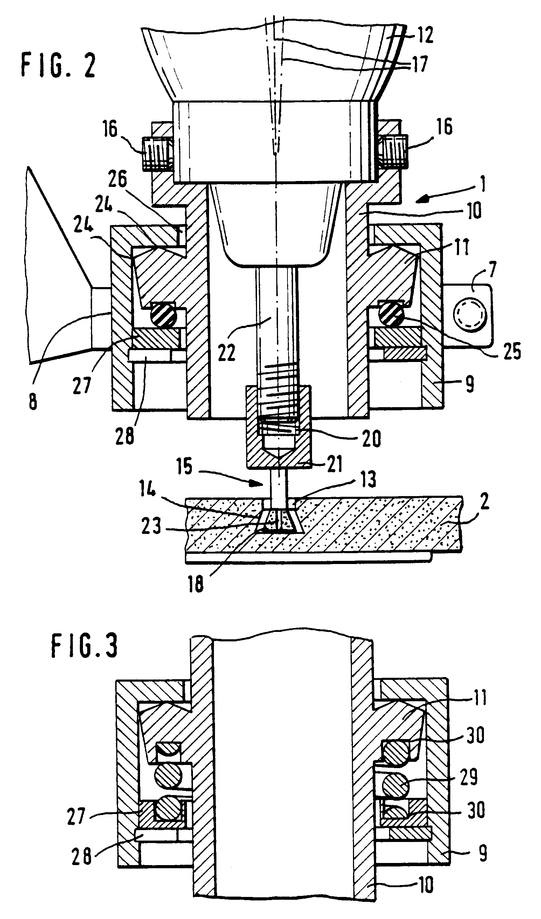

Figur 2 zeigt eine Ausführungsform des Schwenklagers, die ein exaktes und kontrolliertes Ausschwenken der Vorrichtung 1 ermöglicht. Der an der Hülse 10 angeordnete umlaufende Bund 11 weist an einer Stirnfläche und auch an seiner Mantelfläche Abflachungen zur Bildung einer annähernd linienförmigen Anlage 24 in der Lagerbuchse 9 auf. An der anderen Stirnfläche des Bundes 11 ist ein elastisch verformbarer und die Stirnfläche überragender Gummiring 25 angeordnet, der den Bund 11 in der Lagerbuchse 9 axial verspannt. Beim Auslenken der Hülse 10 wird der Gummiring 25 auf der ausgelenkten Seite axial zusammengedrückt, so daß sich eine Schrägstellung der Hülse 10 ergibt. In dieser ausgelenkten Stellung wird die Hülse 10 mit der Bohrmaschine 12 mindestens einmal vollständig um die Mittelachse getaumelt, wobei die Verformung des Gummiringes 25 ebenfalls um die Mittelachse entsprechend der Stellung der Hülse 10 wandert. Durch die linienförmige Anlage 24 des Bundes 11 in der Lagerbuchse 9 und einer Begrenzung der Verformbarkeit des Bundes 11 ergibt sich eine definierte Auslenkung und Taumelbewegung, die zu exakt gleichen Hinterschneidungen 14 der Bohrlöcher 13 führt. Die Begrenzung der Verformbarkeit des Gummiringes 25kann entweder durch Anstoßen der Stirnfläche des Bundes 11 am Boden der Lagerbuchse 9 oder durch einen entsprechenden Ringspalt 26 zwischen der Achsbohrung des Bodens der Lagerbuchse 9 und der Wandung der Hülse 10 erfolgen, die gegen die Wandung der Achsbohrung anschlägt. Für das einfache Zusammenbauen der Hülse 10 mit Bund 11 und der Lagerbuchse 9 ist ein Boden der Lagerbuchse 9 durch eine ringförmige Scheibe 27 gebildet, die über einen Sicherungsring 28 arretiert ist.

Durch den elastischen Gummiring 25 ist die Hülse 10 und damit die Vorrichtung 1 mit der Lagerbuchse 9 so verspannt, daß die Bohrachse 17 senkrecht zur Fassadenplatte 2 steht. In dieser Stellung wird die Vorrichtung 1 gegen die Rückseite der verspannten Fassadenplatte 2 gedrückt und in die Platte eine dem größten Durchmesser des Bohrkopfes 18 entsprechende zylindrische Bohrung 13 eingebracht. Nach Erreichen der gewünschten Bohrlochtiefe, die beispielsweise durch Anschläge an dem Ständer 3 einstellbar ist, wird bei laufender Bohrmaschine 12 die Hülse 10 ausgelenkt und mindestens eine Taumelbewegung durchgeführt. Dabei wird die Hinterschneidung 14 in der Bohrlochtiefe durch das Bohrwerkzeug 15 ausgefräst. Bei Verwendung eines mit Diamantsplitter bestückten Bohrwerkzeuges empfiehlt es sich, während des Bohrvorganges das Bohrloch mit Wasser auszuspülen.

Figur 3 zeigt eine weitere Ausführungsform zur Gestaltung des Schwenklagers. Bei dieser Ausführungsform wird als elastisch verformbares Element eine Druckfeder 29 verwendet, die in entsprechende Ringnuten 30 der Stirnfläche des Bundes und der ringförmigen Scheibe 27 eingelassen ist. Die elastische Verformbarkeit ergibt sich bei dieser Lösung durch Zusammendrücken der Druckfeder 29 auf der ausgelenkten Seite der Hülse 10. Durch Verwendung einer aus Federdraht bestehenden Druckfeder ist eine hohe Lebensdauer des Lagers erreichbar.

## Patentansprüche

1. Vorrichtung (1) zur Herstellung von Bohrlöchern (13) mit Hinterschneidung (14), insbesondere in Fassadenplatten (2), bestehend aus einem das Bohrwerkzeug (15) aufnehmenden und mit einer Bohrmaschine (12) drehmomentübertragend verbundenen Adapter (22), und einer arretierbaren Lagerbuchse (9), in der ein mit einem ringsumlaufenden Bund (11) versehenes und mit der Bohrmaschine (12) verbundenes Schwenkteil dreh- und verschwenkbar aufgenommen ist, **dadurch gekennzeichnet**, daß das Schwenkteil als Hülse (10) ausgebildet und der Bund (11) mit einer Stirnfläche linienförmig in der Lagerbuchse (9) abgestützt ist, daß an der anderen Stirnfläche ein elastisch verformbares, die Stirnfläche überragendes Element (25, 29) angeordnet ist, das den Bund (11) in der Lagerbuchse (9) axial verspannt, und daß der Bund (11) an seiner Mantelfläche linienförmig umlaufend in der Lagerbuchse (9) geführt ist.

2. Vorrichtung nach Anspruch 1, **dadurch gekennzeichnet**, daß das elastisch verformbare Element ein Gummiring (25) ist.

3. Vorrichtung nach Anspruch 1, **dadurch gekennzeichnet**, daß das elastisch verformbare Element eine an ihren beiden Enden plane Stützflächen aufweisende Druckfeder (29) ist.

4. Vorrichtung nach einem der vorhergehenden Ansprüche, **dadurch gekennzeichnet**, daß wenigstens eine der Achsbohrung der Lagerbuchse (9) zur Mantelfläche der Hülse (10) einen Ringspalt (26) bildet, der den maximalen Schwenkwinkel der Hülse (10) begrenzt.

5. Vorrichtung nach einem der vorhergehenden Ansprüche, **dadurch gekennzeichnet**, daß die Lagerbuchse (9) wenigstens an einem Ende als Boden eine ringförmige Scheibe (27) aufweist, die mittels eines Sicherungsringes (28) gehalten ist.

6. Vorrichtung nach einem der vorhergehenden Ansprüche, **dadurch gekennzeichnet**, daß die Lagerbuchse (9) mit einem eine Spanneinrichtung (5) für die Fassadenplatte (2) aufweisenden Ständer (3) verbunden und über einen Hebel (6) gegen die Fassadenplatte (2) bewegbar ist.

7. Vorrichtung nach einem der vorhergehenden Ansprüche, **dadurch gekennzeichnet**, daß das Bohrwerkzeug (15) einen mit Diamantsplitter bestückten, konisch sich zu seiner Stirnseite hin erweiternden Bohrkopf (18) aufweist, der mit wenigstens einem von dessen äußeren Rand ausgehenden, sich über die Achsmitte hinaus erstreckenden Schlitz (23) versehen ist.

## Claims

1. A device (1) for producing drilled holes (13) with an undercut (14), especially in facing panels (2), consisting of an adaptor (22) receiving the drilling tool (15) and joined to a drilling machine (12) so as to transfer torque, and of a lockable bearing bush (9) in which a pivoting part provided with a circumferential collar (11) and joined to the drilling machine (12) is rotatably and pivotally received, characterized in that the pivoting part is in the form of a sleeve (10) and the collar (11) is mounted in the bearing bush (9) with one end face in line contact therewith, at the other end face there is arranged projecting beyond the end face a resiliently deformable element (25, 29) which clamps the collar (11) axially in the bearing bush (9), and at its outer surface the collar is guided circumferentially in line contact with the bearing bush (9).

2. A device according to claim 1, characterized in that the resiliently deformable element is a rubber ring (25).

3. A device according to claim 1, characterized in that the resiliently deformable element is a pressure spring (29) having flat bearing faces at both ends.

4. A device according to one of the preceding claims, characterized in that at least one of the axial bores of the bearing bush (9) forms an annular gap (26) towards the outer surface of the sleeve (10), which gap restricts the maximum pivotal angle of the sleeve (10).

5. A device according to one of the preceding claims, characterized in that at least at one end the bearing bush (9) has as its base an annular disc (27), which is held by means of a securing ring (28).

6. A device according to one of the preceding claims, characterized in that the bearing bush (9) is joined to a support stand (3) having a clamping arrangement (5) for the facing panel (2) and is movable by means of a lever (6) towards the facing panel (2).

7. A device according to one of the preceding claims, characterized in that the drilling tool (15) has a drilling head (18) tipped with diamond chips and widening conically towards its front end, which drilling head is provided with at least one slot (23) starting from its outer edge and extending beyond the midway point of the axis.

## Revendications

1. Dispositif (1) pour la réalisation de perçages (13) à épaulement (14), notamment dans des panneaux de façade (2), comprenant un adaptateur (22) qui reçoit l'outil de percement (15) et est relié à une perceuse (12), avec transmission d'un couple de rotation, et un fourreau de portée (9) pouvant être arrêté et dans lequel est logée, avec faculté de rotation et de pivotement, une pièce pivotante qui est pourvue d'un collet périphérique (11) et est reliée à la perceuse (12), caractérisé par le fait que la pièce pivotante est réalisée sous la forme d'une douille (10) et le collet (11) est en appui linéaire, par une face extrême, dans le fourreau de portée (9) ; par le fait qu'un élément (25, 29) élastiquement déformable, situé à l'autre face extrême au-delà de laquelle il dépasse, bloque axialement le collet (11) dans le fourreau de portée (9) ; et par le fait que le collet (11) est guidé linéairement et circonférentiellement, sur la surface de son enveloppe, dans le fourreau de portée (9).

2. Dispositif selon la revendication 1, caractérisé par le fait que l'élément élastiquement déformable est une bague en caoutchouc (25).

3. Dispositif selon la revendication 1, caractérisé par le fait que l'élément élastiquement déformable est un ressort de pression (29), muni de surfaces planes d'appui à ses deux extrémités.

4. Dispositif selon l'une des revendications précédentes, caractérisé par le fait qu'au moins un trou axial du fourreau de portée (9) forme, par rapport à la surface de l'enveloppe de la douille (10), un interstice annulaire (26) limitant l'angle maximal de pivotement de ladite douille (10).

5. Dispositif selon l'une des revendications précédentes, caractérisé par le fait que le fourreau de portée (9) comporte au moins à une extrémité, en tant que fond, un disque annulaire (27) retenu au moyen d'une bague d'arrêt (28).

6. Dispositif selon l'une des revendications précédentes, caractérisé par le fait que le fourreau de portée (9) est relié à une console (3) munie d'un système (5) d'ablocage du panneau de façade (2), et peut être déplacé vers le panneau de façade (2) par l'intermédiaire d'un levier (6).

7. Dispositif selon l'une des revendications précédentes, caractérisé par le fait que l'outil de percement (15) présente une tête foreuse (18) garnie d'éclats de diamant, s'élargissant tronconiquement en direction de sa face extrême, et pourvue d'au moins une fente (23) qui part de son bord externe, et s'étend au-delà du centre axial.
